# EUROPÄISCHE PATENTSCHRIFT

(11) **EP 3 340 956 B1**
(45) Veröffentlichungstag und Bekanntmachung des Hinweises auf die Patenterteilung: **29.07.2020**
(21) Anmeldenummer: 16753404.9
(22) Anmeldetag: 18.08.2016
(51) Int. Cl.: A61G 7/05, A61G 7/08, A61G 13/10

(54) **LAGERFLÄCHENTRANSPORTER MIT EINEM BEDIENGRIFF**
SUPPORT SURFACE TRANSPORTER WITH OPERATING HANDLE
TRANSPORTEUR POUR SURFACE DE SUPPORT AVEC POIGNÉE DE COMMANDE

(30) Priorität: 25.08.2015 DE 102015011200
(43) Veröffentlichungstag der Anmeldung: 04.07.2018
(73) Patentinhaber: Maquet GmbH, 76437 Rastatt (DE)
(72) Erfinder: STEINHAUSER, Florian, 88213 Ravensburg (DE)
(74) Vertreter: Zacco GmbH
(86) Internationale Anmeldenummer: PCT/EP2016/069651
(87) Internationale Veröffentlichungsnummer: WO 2017/032694

(56) Entgegenhaltungen:
- WO-A1-2013/054660
- WO-A1-2015/004067
- DE-A1-102006 057 311

## Beschreibung

### Hintergrund der Erfindung

Die vorliegende Erfindung betrifft einen Lagerflächentransporter für einen Operationstisch mit einem Bediengriff. Bei Operationstischen ist es üblich, dass eine Lagerfläche zur Lagerung eines Patienten abnehmbar auf einem Sockel angebracht ist, und dass zum Transport der Lagerfläche und des Patienten ein motorisierter Lagerflächentransporter verwendet werden kann. Ein derartiger Lagerflächentransporter umfasst üblicherweise ein Oberteil zur Aufnahme der Lagerfläche des Operationstisches und ein Unterteil mit Rollen zum Verfahren des Lagerflächentransporters.

Einige Lagerflächentransporter müssen samt Lagerfläche und Patient von Hand geschoben werden. Hierbei ist mitunter eine Gesamtmasse von bis zu 630kg zu bewegen. Daher sind Lagerflächentransporter mit motorisierten Antriebsrollen entwickelt worden, um ein Verfahren des Lagerflächentransporters über längere Strecken für den Benutzer zu vereinfachen. Allerdings ist hierbei die Bedienung der motorisierten Antriebsrollen für den Benutzer umständlich, insbesondere ist es für den Benutzer schwierig, gleichzeitig die Antriebsgeschwindigkeit zu steuern und dabei den schweren, sperrigen Lagerflächentransporter zu lenken.

Aus DE 60 306 002 T2 ist eine Lenkereinrichtung für ein Fahrzeug bekannt, welche ein um seine Längsachse drehbares Griffstück, einen Drehwinkelsensor und einen Kraftsensor umfasst.

US 2007/0245488 A1 zeigt einen Lagerflächentransporter mit mindestens einem angetriebenen Rad und mit einer Lenkvorrichtung, welche unabhängig von dem angetriebenen Rad betrieben wird.

US 2011/0087416 A1 zeigt einen Lagerflächentransporter mit einem Motor zum Antrieb eines oder mehrerer Räder, wobei ein Bediengriff vorgesehen ist, mittels dessen ein Benutzer die Antriebsgeschwindigkeit des Motors steuern kann.

WO 2013/054660 A1 offenbart einen Antriebswagen und einen dazugehörigen Bediengriff. Diese können an einem Patientenbett angebracht werden, sodass dieses motorisiert verfahren werden kann.

WO 2015/004067 A1 betrifft einen Operationstisch mit einem mit einem Wählrad und einem Bedienknopf versehenen Bediengriff.

Die DE 10 2006 057 311 A1 beschreibt einen Dreh-/Druckschalter.

Es ist eine Aufgabe der vorliegenden Erfindung, einen Lagerflächentransporter mit einem Bediengriff bereitzustellen, welcher es dem Benutzer ermöglicht, sowohl die Antriebsgeschwindigkeit, als auch die Antriebsrichtung einfach zu steuern.

### Überblick über die Erfindung

Die voranstehend genannte Aufgabe wird durch einen Lagerflächentransporter zur Aufnahme eines zu transportierenden Gegenstandes, wie beispielsweise einer Lagerfläche eines Operationstisches, umfassend wenigstens zwei motorisierte Antriebsrollen sowie einen Bediengriff, gelöst, wobei der Bediengriff ein um seine Längsachse drehbar an einem Sensorgehäuse des Bediengriffs angebrachtes Griffstück umfasst. Weiterhin umfasst der Bediengriff einen Drehwinkelsensor zum Erfassen eines Drehwinkels und einer Drehrichtung des Griffstücks und zum Bereitstellen eines Sensorsignals an eine Steuereinheit der wenigstens zwei Antriebsrollen. Dadurch kann durch eine Drehung des Griffstücks beispielsweise die Geschwindigkeit und die Fahrtrichtung (vorwärts/rückwärts) des Lagerflächentransporters gesteuert werden. Außerdem ist ein Kraftsensor zum Erfassen einer auf das Griffstück in Richtung seiner Längsachse ausgeübten Kraft und zum Bereitstellen eines Sensorsignals an die Steuereinheit der wenigstens zwei Antriebsrollen vorgesehen. Der Kraftsensor ist im Sensorgehäuse des Bediengriffs integriert. Über den Kraftsensor können Lenkbewegungen, d.h. Druck auf den Bediengriff quer zur Fahrtrichtung des Lagerflächentransporters, erfasst werden. Somit können mittels der Sensoren des Bediengriffs sowohl eine Drehung des Griffstücks um seine Längsachse, als auch Querkräfte in Richtung der Längsachse des Griffstücks erfasst werden und zur Steuerung der Antriebsrollen verwendet werden. Ein Benutzer kann damit beispielsweise die Geschwindigkeit und die Bewegungsrichtung vorwärts oder rückwärts durch entsprechendes Verdrehen des Griffstücks steuern, und gleichzeitig eine Lenkbewegung durch entsprechende Querkräfte auf den Bediengriff steuern. Dadurch kann der Lagerflächentransporter einhändig verfahren werden, wobei Lenkimpulse intuitiv durch Schieben des Bediengriffs in die entsprechende Richtung übermittelt werden können.

Gemäß einiger Ausführungsformen kann der Bediengriff ferner einen Freigabeschalter umfassen, welcher derart ausgelegt ist, dass Motoren der Antriebsrollen stromlos sind, wenn der Freigabeschalter nicht betätigt ist. Dadurch kann verhindert werden, dass durch eine Fehlfunktion des Bediengriffs oder durch eine unabsichtliche Berührung des Griffstücks durch einen Benutzer die Antriebsrollen versehentlich angetrieben werden.

Dabei kann der Freigabeschalter eine Klinke am Griffstück umfassen, welche durch einen Benutzer beim Ergreifen des Griffstücks gedrückt wird. Eine derartige Klinke wird somit automatisch dann betätigt, wenn ein Benutzer das Griffstück umfasst und es zur Steuerung der Antriebsrollen verwenden möchte. Die Klinke kann dabei an einer hinteren und/oder unteren Position des Griffstücks angebracht sein, um zu verhindern, dass die Klinke durch eine zufällige Berührung unabsichtlich betätigt wird.

Um den Benutzer auf das Einschalten des motorischen Antriebs hinzuweisen, kann vorgesehen sein, dass ein Hinweiston bei Betätigen des Freigabeschalters ausgegeben wird. Alternativ oder zusätzlich können auch optische oder haptische Hinweissignale ausgegeben werden, beispielsweise durch LEDs oder durch Vibration des Griffstücks.

Gemäß einiger Ausführungsformen kann der Kraftsensor ein mit dem Griffstück verbundenes erstes Element, ein mit dem Lagerflächentransporter verbundenes zweites Element und einen zwischen dem ersten und dem zweiten Element angeordneten Verbindungssteg umfassen, welcher durch Aufbringen einer Kraft in Richtung der Längsachse des Griffstücks verformbar ist. Mit einem derartigen Kraftsensor können der Betrag und die Richtung der aufgebrachten Querkräfte parallel zur Längsachse des Griffstücks besonders einfach und genau erfasst werden.

Der Lagerflächentransporter kann eine Steuereinheit umfassen, welche die Antriebsrollen in Abhängigkeit der Signale des Drehwinkelsensors und des Kraftsensors als elektronisches Differential steuert. Somit kann durch die Differentialsteuerung eine Kurvenfahrt der Antriebsrollen erreicht werden.

Gemäß einiger Ausführungsformen kann die Steuereinheit ausgelegt sein, um aus den Signalen des Drehwinkelsensors eine Sollgeschwindigkeit des Lagerflächentransporters und aus den Signalen des Kraftsensors eine Sollrotation des Lagerflächentransporters zu ermitteln. Dabei kann beispielsweise das jeweilige Vorzeichen der Sollgeschwindigkeit und der Sollrotation angeben, ob es sich um eine Vorwärts- oder Rückwärtsbewegung und um eine Kurvenfahrt nach links oder nach rechts handelt. Die Drehzahl wenigstens einer Antriebsrolle kann dabei durch Addition der Sollgeschwindigkeit und der Sollrotation bestimmt werden, und die Drehzahl wenigstens einer anderen Antriebsrolle kann durch Subtraktion der Sollgeschwindigkeit und der Sollrotation bestimmt werden. Dadurch kann mit einer einfachen Schaltung ein elektronisches Differential zur Steuerung der Drehzahl der Antriebsrollen bereitgestellt werden.

Gemäß einiger Ausführungsformen kann die Steuereinheit ferner ausgelegt sein, den Wert und/oder die zeitliche Änderung der Drehzahl wenigstens einer Antriebsrolle auf vorbestimmte Maximalwerte zu begrenzen. Dadurch kann ein Durchdrehen der Antriebsrollen aufgrund zu hoher Drehzahlen verhindert werden, und es kann weiterhin sichergestellt werden, dass die Geschwindigkeit und die Beschleunigung des Lagerflächentransporters nicht übermäßig hoch werden, so dass der Transport einen auf der Lagerfläche liegenden Patienten nicht unnötig belastet.

### Kurze Beschreibung der Zeichnungen

Beispielhafte Ausführungsformen der vorliegenden Erfindung werden nachstehend unter Bezugnahme auf die angehängten Zeichnungen beschrieben, in welchen gleiche Bezugszeichen jeweils gleiche oder einander entsprechende Elemente bezeichnen.
- Fig. 1: zeigt eine perspektivische Ansicht eines Unterteils eines Lagerflächentransporters mit einem Bediengriff gemäß einer Ausführungsform der vorliegenden Erfindung;
- Fig. 2: zeigt eine schematische Ansicht einer Ausführungsform des Bediengriffs;
- Fig. 3: zeigt ein Schaltschema zur Steuerung von Antriebsrollen mit einem Bediengriff gemäß einer Ausführungsform; und
- Fig. 4: zeigt ein Flussdiagramm, das den Betrieb des Bediengriffs gemäß einer Ausführungsform illustriert.

### Detaillierte Beschreibung

In der folgenden Beschreibung werden unter Bezugnahme auf die Zeichnungen beispielhafte Ausführungsformen der vorliegenden Erfindung beschrieben. Die Zeichnungen sind dabei nicht notwendigerweise maßstabsgetreu, sondern sollen die jeweiligen Merkmale lediglich schematisch illustrieren.

Dabei ist zu beachten, dass die nachstehend beschriebenen Merkmale und Komponenten jeweils miteinander kombiniert werden können, unabhängig davon, ob sie in Zusammenhang mit einer einzigen Ausführungsform beschrieben worden sind. Die Kombination von Merkmalen in den jeweiligen Ausführungsformen dient lediglich der Veranschaulichung des grundsätzlichen Aufbaus und der Funktionsweise der beanspruchten Vorrichtung.

Ein Lagerflächentransporter 1 gemäß einer Ausführungsform setzt sich im Wesentlichen aus einem Unterteil 2 und einem Oberteil 3 zusammen. Das Oberteil 3 ist derart ausgestaltet, dass es eine Lagerfläche eines Operationstisches aufnehmen kann, um die Lagerfläche und den darauf gelagerten Patienten an einen gewünschten Ort zu transportieren. Die einzelnen Bestandteile und Funktionen des Oberteils 3 werden hier nicht näher beschrieben.

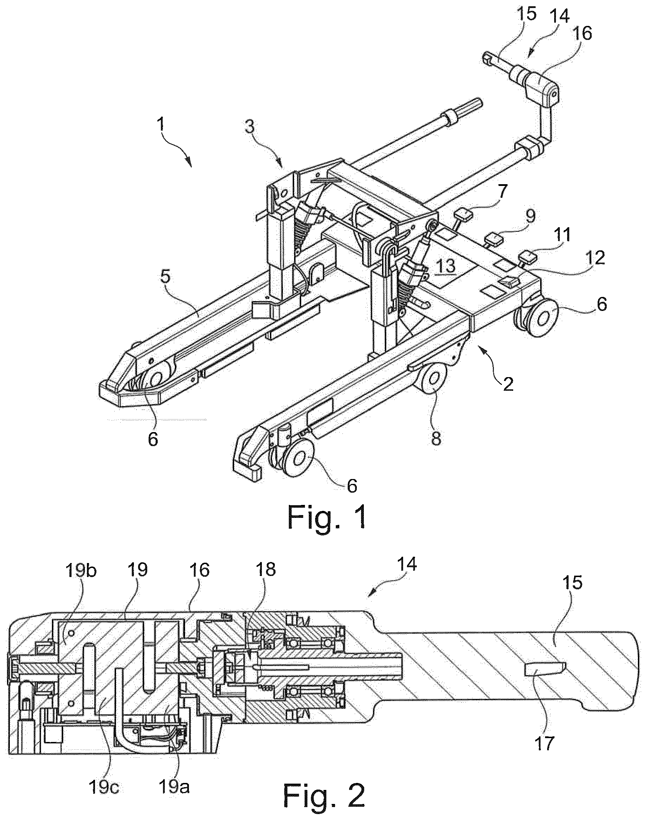

Das Unterteil 2 des Lagerflächentransporters 1 umfasst einen Rahmen 5. Zum manuellen Verschieben des Lagerflächentransporters 1 in eine beliebige Richtung sind eine Mehrzahl von Doppellenkrollen 6 vorgesehen. In der in Fig. 1 gezeigten Ausführungsform sind vier Doppellenkrollen 6 am Rahmen 5 angebracht, es ist jedoch alternativ auch möglich, drei, fünf, sechs oder noch mehr Doppellenkrollen 6 vorzusehen. Am Rahmen 5 kann ein Pedal 9 zum wahlweisen Arretieren und Freigeben der Doppellenkrollen 6 angebracht sein, um den Lagerflächentransporter 1 in einer gewünschten Position sicher zu fixieren.

Bei der in Fig. 1 gezeigten Ausführungsform sind zwei motorisierte Antriebsrollen 8 am Rahmen 5 vorgesehen, die mithilfe eines manuell zu betätigenden Pedals 7 und einer Absenkmechanik jeweils entweder vom Fußboden abgehoben oder gegen den Fußboden gedrückt werden können. Gemäß anderer Ausführungsformen der Erfindung ist es möglich, mehr als zwei Antriebsrollen 8 vorzusehen. Die Antriebsrollen 8 können beispielsweise als bürstenlose Außenläufer-Elektromotoren ausgestaltet sein.

Weiterhin kann am Rahmen 5 ein Pedal 11 zur Höhenverstellung des Oberteils 3 des Lagerflächentransporters 1, beispielsweise mittels eines Hydraulikmechanismus und einer durch das Pedal 11 betätigten Pumpe, vorgesehen sein, und es können Fußschalter 12 zum prä- / postoperativen Lagerflächentransfer und eine Steuereinheit 13 am bzw. im Rahmen 5 aufgenommen sein.

Ein Benutzer kann den Lagerflächentransporter 1 mittels eines Bediengriffs 14 bewegen. Wie in Fig. 1 schematisch durch Pfeile dargestellt, ist ein Griffstück 15 um seine Längsachse drehbar an einem Sensorgehäuse 16 des Bediengriffs 14 angebracht.

Fig. 2 zeigt den Bediengriff 14. Am Griffstück 15 ist ein Freigabeschalter 17 in Form einer Klinke 17 angebracht, die vom Benutzer beim Umfassen des Griffstücks 15 gedrückt wird. Alternativ ist denkbar, einen Freigabeschalter als einen Druckschalter oder Taster an einer beliebigen Position des Bediengriffs 14 vorzusehen, oder einen Drucksensor, welcher ein Umfassen des Bediengriffs 14 detektiert, als Freigabeschalter vorzusehen. Der Freigabeschalter 17 schaltet bei der vorliegenden Ausführungsform die Leistungsversorgung der Elektromotoren der Antriebsrollen 8 ein, so dass es ohne Betätigung des Freigabeschalters 17 nicht möglich ist, den Lagerflächentransporter 1 motorisch zu verfahren.

Durch den Freigabeschalter 17 wird daher sichergestellt, dass auch im Fehlerfall keine Bewegungen des Lagerflächentransporters 1 ohne Bedienung stattfinden. Bei Betätigung des Freigabeschalters 17 kann durch einen Hinweiston signalisiert werden, dass eine Bewegung möglich ist. Mit weiteren Hinweistönen kann beispielsweise ein niedriger Ladestand der Batterie signalisiert werden. Für den Fall, dass der Anwender den Lagerflächentransporter 1 manuell ohne Motorunterstützung verfahren möchte, werden die Motoren der Antriebsrollen 8 in einen stromlosen Zustand versetzt, sobald der Freigabeschalter 17 losgelassen wird. Dadurch wird sichergestellt, dass die Motoren keine Bremswirkung ausüben.

Weiterhin umfasst das Griffstück 14 einen Drehwinkelsensor 18 zum Erfassen eines Drehwinkels des Griffstücks 14 relativ zum Sensorgehäuse 16. Mittels des Drehwinkelsensors 18 kann ein Benutzer die Geschwindigkeit der Antriebsrollen 8 und die Antriebsrichtung (vorwärts oder rückwärts) steuern. Im Sensorgehäuse 16 des Bediengriffs 14 ist ein Kraftsensor 19 integriert, welcher die durch den Anwender aufgebrachten Querkräfte auf den Bediengriff 14 ermittelt. Die Signale des Drehwinkelsensors 18 und des Kraftsensors 19 können beispielsweise in der Steuereinheit 13 des Lagerflächentransporters 1 ausgewertet werden, oder es kann ein zusätzliches Steuergerät vorgesehen sein.

Fig. 2 zeigt schematisch ein Beispiel für einen Kraftsensor 19, welcher ein erstes Element 19a, ein zweites Element 19b und einen Verbindungssteg 19c umfasst. Das erste Element 19a ist dabei mit einer nicht um die Längsachse drehbaren Komponente des Griffstücks 15 verbunden, wie beispielsweise einer Mittelstrebe, um die das Griffstück 15 drehbar gelagert ist. Das zweite Element 19b ist fest mit dem Lagerflächentransporter 1 verbunden. Bei Kräften, die in Richtung der Längsachse des Griffstücks 15 wirken, wird daher das erste Element 19a relativ zum zweiten Element 19b bewegt, so dass der Verbindungssteg 19c verformt wird. Der Betrag und die Richtung der Verformung werden durch den Kraftsensor 19 als Signal bereitgestellt.

Will der Anwender eine Kurve nach rechts fahren, drückt er intuitiv das Griffstück 15 des Bediengriffs 14 nach links. Will der Anwender eine Kurve nach links fahren, drückt er das Griffstück 15 des Bediengriffs 14 nach rechts. Diese Information wertet die Steuereinheit 13 aus und steuert entsprechend die beiden Antriebsrollen 8 so an, dass eine entsprechende Kurvenfahrt erzeugt wird. Man spricht hiervon einem elektronischen Differential.

Der voranstehend beschriebene Bediengriff 14 ermöglicht somit eine einhändige Bedienung des Lagerflächentransporters 1 mit vier passiven Rollen 6 sowie zwei aktiven Antriebsrollen 8.

Gemäß einiger Ausführungsformen kann durch das Ausüben von Querkräften auf den Bediengriff 14 eine Ansteuerung der Drehgeschwindigkeit und -richtung ("Lenkung") erreicht werden. Dabei kann die auf den Bediengriff ausgeübte Kraft die Drehgeschwindigkeit der Lenkbewegung bestimmen, und die Kraftrichtung kann die Drehrichtung bestimmen. Durch Drehen des Griffstücks 15 um seine Längsachse kann eine Ansteuerung der Geschwindigkeit und Richtung (Vorwärts-/Rückwärts) erreicht werden. Dabei kann mittels der Auslenkungsweite die Geschwindigkeit und mittels der Auslenkungsrichtung die Bewegungsrichtung bestimmt werden. Durch Rotation des Griffstücks 15 nach vorne fährt der Lagerflächentransporter 1 vorwärts, durch Rotation in Gegenrichtung entsprechend rückwärts Die Bewegung kann dabei über den Freigabeschalter 17 freigegeben werden, indem durch Drücken des Freigabeschalters 17 die Ansteuerung der Elektromotoren der Antriebsrollen 8 aktiviert wird.

Dadurch wird eine intuitive Bedienung des Lagerflächentransporters 1 ermöglicht, da die Bewegung und die Kraft, die der Benutzer zur Steuerung auf den Bediengriff 14 ausübt, der natürlichen Schubrichtung und natürlichen Lenkimpulsen zum Schieben eines Gestells um eine Kurve entsprechen.

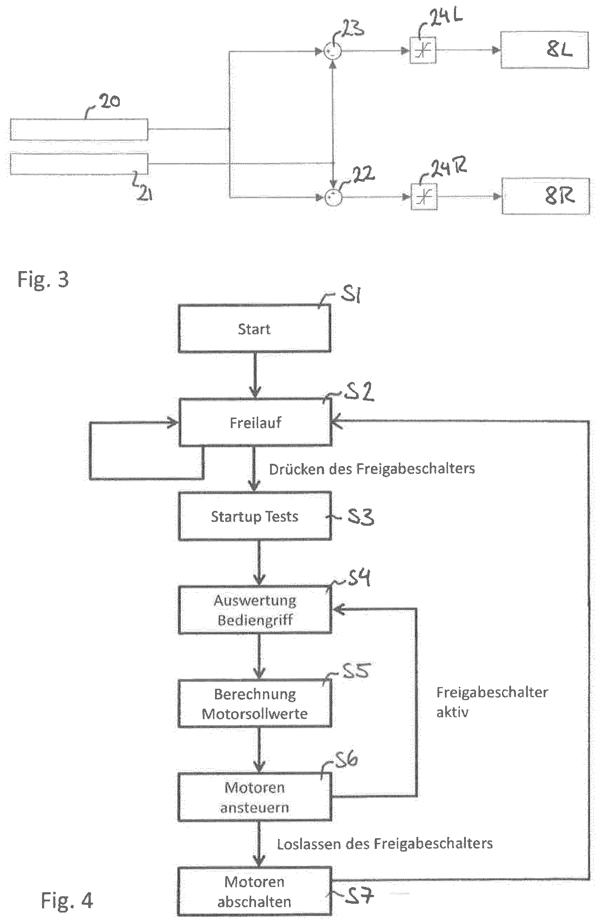

In Fig. 3 ist ein Schaltschema gezeigt, um zu erläutern, wie bei einer Ausführungsform die Ansteuerung der Einzelmotoren 8L, 8R der Antriebsrollen 8 durch Überlagerung eines Vorwärtsanteils und eines Lenkanteils vorgenommen wird.

Aus dem vom Drehwinkelsensor 18 bereitgestellten Signal wird in der Steuereinheit 13 eine Sollgeschwindigkeit 20 des Lagerflächentransporters 1 ermittelt. Weiterhin wird aus dem vom Kraftsensor 19 bereitgestellten Signal eine Sollrotation 21 des Lagerflächentransporters 1 ermittelt. Die Sollgeschwindigkeit 20 und die Sollrotation 21 werden in entsprechenden Schaltungen 22, 23 addiert bzw. subtrahiert, so dass für jeden Motor 8L, 8R der dazugehörigen linken bzw. rechten Antriebsrolle 8 eine Drehzahl erzeugt werden kann. Um ein Durchdrehen der Antriebsrollen 8 oder eine übermäßig hohe Geschwindigkeit des Lagerflächentransporters 1 zu vermeiden, können entsprechende Begrenzer 24L, 24R vorgesehen sein, welche die Drehzahl jedes Motors 8L, 8R begrenzen und welche beispielsweise auch plötzliche Änderungen der Drehzahl dämpfen können.

Der Vorwärtsanteil, d.h. die Sollgeschwindigkeit 20, ist für beide Motoren 8L, 8R identisch und wird abhängig von der Auslenkung des Griffstücks 15 berechnet. Der Lenkanteil, d.h. die Sollrotation 21, unterscheidet sich zwischen dem rechten und linken Antrieb 8R, 8L. Bei einer Kurvenfahrt nach rechts wird der Lenkanteil des rechten Antriebs 8R negativ sein, links entsprechend positiv. Damit wird ein elektronisches Differential bereitgestellt, wobei durch die unterschiedlichen Werte der Drehzahl der beiden Elektromotoren 8R, 8L eine Kurvenfahrt das Lagerflächentransporters 1 realisiert werden kann.

Fig. 4 zeigt schematisch einen Ablauf einer Bedienungssequenz zur Steuerung der Bewegung des Lagerflächentransporters 1 mittels des Bediengriffs 14 gemäß einer Ausführungsform. Nach dem Start in Schritt S1 wird in Schritt S2 zunächst der Freilauf der Antriebsrollen 8 sichergestellt, solange der Freigabeschalter 17 nicht gedrückt ist. Sobald der Freigabeschalter 17 gedrückt wird, können in Schritt S3 verschiedene Startup Tests durchgeführt werden, um die Funktion der Sensoren des Bediengriffs 14 und die Funktion der Elektromotoren 8R, 8L zu überprüfen.

Anschließend werden in Schritt S4 die Sensorsignale des Bediengriffs 14 ausgewertet. Diese Auswertung kann in einer allgemeinen Steuereinheit 13 des Lagerflächentransporters 1 erfolgen, oder es kann für das System aus Bediengriff 14 und Antriebsrollen 8 ein eigenes Steuergerät vorgesehen sein. Solange der Freigabeschalter 17 gedrückt gehalten wird, können in Schritt S5 die Motorsollwerte 20, 21 berechnet werden (siehe Fig. 3) und in Schritt S6 die Elektromotoren 8R, 8L entsprechend angesteuert werden, bevor wieder zu Schritt S4 zurückgekehrt wird um weitere Sensorsignale des Bediengriffs 14 auszuwerten.

Sobald der Freigabeschalter 17 losgelassen wird, werden in Schritt S7 die Motoren abgeschaltet, so dass die Antriebsrollen 8 wieder im Freilauf (Schritt S2) bewegt werden können.

Mit dem voranstehend beschriebenen Bediengriff 14 gemäß der verschiedenen Ausführungsformen kann der Lagerflächentransporter 1 mit einer Hand bedient bzw. gefahren werden. Die Bedienung erfolgt dabei intuitiv mit geringem Einlernaufwand. Durch die Fahr- und Lenkunterstützung können Patienten mit geringem Kraftaufwand auch über längere Strecken befördert werden.

Durch die intuitive Bedienung und durch eine sanfte Antriebsregelung mit Begrenzung der Motordrehzahlen und der Beschleunigungen kann der Komfort für den Patienten erhöht werden.

Voranstehend ist der Bediengriff 14 in Zusammenhang mit einem Lagerflächentransporter 1 beschrieben worden. Ein derartiger Bediengriff 14 ist auch bei anderen motorisierten Fahrgestellen einsetzbar und ermöglicht eine intuitive, einhändige Bedienung auch beim Verfahren von anderen schweren und/oder sperrigen Lasten auf entsprechenden Fahrgestellen mit mindestens zwei Antriebsrollen.

## Patentansprüche

1. Lagerflächentransporter (1) zur Aufnahme eines zu transportierenden Gegenstandes, wie beispielsweise einer Lagerfläche eines Operationstisches, umfassend wenigstens zwei motorisierte Antriebsrollen (8) sowie einen Bediengriff (14), wobei der Bediengriff (14) folgendes umfasst:
ein Sensorgehäuse (16);
ein Griffstück (15), welches um seine Längsachse drehbar an dem Sensorgehäuse (16) des Bediengriffs (14) angebracht ist;
einen Drehwinkelsensor (18) zum Erfassen eines Drehwinkels und einer Drehrichtung des Griffstücks (15) und zum Bereitstellen eines Sensorsignals an eine Steuereinheit (13) der wenigstens zwei Antriebsrollen (8); und
einen Kraftsensor (19) zum Erfassen einer auf das Griffstück (15) in Richtung der Längsachse des Griffstücks (15) ausgeübten Kraft und zum Bereitstellen eines Sensorsignals an die Steuereinheit (13) der wenigstens zwei Antriebsrollen (8),
**dadurch gekennzeichnet, dass** der Kraftsensor im Sensorgehäuse (16) des Bediengriffs (14) integriert ist.

2. Lagerflächentransporter (1) nach Anspruch 1, wobei der Bediengriff (14) ferner einen Freigabeschalter (17) umfasst, welcher derart ausgelegt ist, dass Motoren der Antriebsrollen (8) stromlos sind, wenn der Freigabeschalter (17) nicht betätigt ist.

3. Lagerflächentransporter (1) nach Anspruch 2, wobei der Freigabeschalter (17) eine Klinke (17) am Griffstück (15) umfasst, welche durch einen Benutzer beim Ergreifen des Griffstücks (15) gedrückt wird.

4. Lagerflächentransporter (1) nach einem der Ansprüche 2 oder 3, wobei ein Hinweiston bei Betätigen des Freigabeschalters (17) ausgegeben wird.

5. Lagerflächentransporter (1) nach einem der Ansprüche 1 bis 4, wobei der Kraftsensor (19) ein mit dem Griffstück (15) verbundenes erstes Element (19a), ein mit dem Lagerflächentransporter (1) verbundenes zweites Element (19b) und einen zwischen dem ersten und dem zweiten Element (19a, 19b) angeordneten Verbindungssteg (19c) umfasst, welcher durch Aufbringen einer Kraft in Richtung der Längsachse des Griffstücks (15) verformbar ist.

6. Lagerflächentransporter nach einem der vorherigen Ansprüche, ferner umfassend eine Steuereinheit (13), welche die Antriebsrollen (8) in Abhängigkeit der Signale des Drehwinkelsensors (18) und des Kraftsensors (19) als elektronisches Differential steuert.

7. Lagerflächentransporter nach Anspruch 6, wobei die Steuereinheit (13) ausgelegt ist, um aus den Signalen des Drehwinkelsensors (18) eine Sollgeschwindigkeit (20) des Lagerflächentransporters (1) und aus den Signalen des Kraftsensors (19) eine Sollrotation des Lagerflächentransporters (1) zu ermitteln, wobei die Drehzahl wenigstens einer Antriebsrolle (8) durch Addition der Sollgeschwindigkeit (20) und der Sollrotation (21) bestimmt wird, und die Drehzahl wenigstens einer anderen Antriebsrolle (8) durch Subtraktion der Sollgeschwindigkeit (20) und der Sollrotation (21) bestimmt wird.

8. Lagerflächentransporter (1) nach einem der Ansprüche 6 oder 7, wobei die Steuereinheit (13) ferner ausgelegt ist, den Wert und/oder die zeitliche Änderung der Drehzahl wenigstens einer Antriebsrolle (8) auf vorbestimmte Maximalwerte zu begrenzen.

## Claims

1. Bearing surface transporter (1) for receiving an object to be transported, such as a bearing surface of a surgical table, comprising at least two motorized drive rollers (8) and an operating handle (14), the operating handle (14) comprising the following:
a sensor housing (16);
a handle piece (15) which is attached to the sensor housing (16) of the operating handle (14) so as to be rotatable about the longitudinal axis thereof;
an angle of rotation sensor (18) for detecting an angle of rotation and a direction of rotation of the handle piece (15) and for providing a sensor signal to a control unit (13) of the at least two drive rollers (8); and
a force sensor (19) for detecting a force exerted on the handle piece (15) in the direction of the longitudinal axis of the handle piece (15) and for providing a sensor signal to the control unit (13) of the at least two drive rollers (8),
**characterized in that** the force sensor is integrated in the sensor housing (16) of the operating handle (14).

2. Bearing surface transporter (1) according to claim 1, wherein the operating handle (14) further comprises a release switch (17) which is designed such that motors of the drive rollers (8) are de-energized when the release switch (17) is not actuated.

3. Bearing surface transporter (1) according to claim 2, wherein the release switch (17) comprises a lever (17) on the handle piece (15) that is pressed by a user when gripping the handle piece (15).

4. Bearing surface transporter (1) according to either claim 2 or claim 3, wherein an alert tone is emitted when the release switch (17) is actuated.

5. Bearing surface transporter (1) according to any of claims 1 to 4, wherein the force sensor (19) comprises a first element (19a) connected to the handle piece (15), a second element (19b) connected to the bearing surface transporter (1), and a connecting rib (19c) arranged between the first and the second element (19a, 19b), which rib can be deformed by applying a force in the direction of the longitudinal axis of the handle piece (15).

6. Bearing surface transporter according to any of the preceding claims, further comprising a control unit (13) which controls the drive rollers (8) on the basis of the signals of the angle of rotation sensor (18) and the force sensor (19) as an electronic differential.

7. Bearing surface transporter according to claim 6, wherein the control unit (13) is designed to determine a target speed (20) of the bearing surface transporter (1) from the signals of the angle of rotation sensor (18) and a target rotation of the bearing surface transporter (1) from the signals of the force sensor (19), wherein the rotational speed of at least one drive roller (8) is established by adding the target speed (20) and the target rotation (21), and the rotational speed of at least one other drive roller (8) is established by subtracting the target speed (20) and the target rotation (21).

8. Bearing surface transporter (1) according to either claim 6 or claim 7, wherein the control unit (13) is further designed to limit the value and/or the temporal change of the rotational speed of at least one drive roller (8) to predetermined maximum values.

## Revendications

1. Dispositif de transport de surfaces de support (1) destiné à recevoir un objet à transporter, par exemple une surface de support d'une table d'opération, comprenant au moins deux roulettes d'entraînement motorisées (8) et une poignée de commande (14), dans lequel la poignée de commande (14) comprend :
un boîtier de capteur (16) ;
une poignée (15) fixée au boîtier de capteur (16) de la poignée de commande (14) de manière à pouvoir tourner autour de son axe longitudinal ;
un capteur d'angle de rotation (18) destiné à détecter un angle de rotation et un sens de rotation de la poignée (15) et à fournir un signal de capteur à une unité de commande (13) des au moins deux roulettes d'entraînement (8) ; et
un capteur de force (19) destiné à détecter une force exercée sur la poignée (15) dans la direction de l'axe longitudinal de la poignée (15) et à fournir un signal de capteur à l'unité de commande (13) des au moins deux roulettes d'entraînement (8), **caractérisé en ce que** le capteur de force est intégré dans le boîtier de capteur (16) de la poignée de commande (14).

2. Dispositif de transport de surfaces de support (1) selon la revendication 1, dans lequel la poignée de commande (14) comprend en outre un commutateur de libération (17) conçu de telle manière que les moteurs des roulettes d'entraînement (8) soient mis hors tension lorsque le commutateur de libération (17) n'est pas actionné.

3. Dispositif de transport de surfaces de support (1) selon la revendication 2, dans lequel le commutateur de libération (17) comprend un cliquet (17) au niveau de la poignée (15) qui est appuyé par un utilisateur lorsqu'il saisit la poignée (15).

4. Dispositif de transport de surfaces de support (1) selon l'une des revendications 2 ou 3, dans lequel une tonalité d'avertissement est émise lorsque le commutateur de libération (17) est actionné.

5. Dispositif de transport de surfaces de support (1) selon l'une des revendications 1 à 4, dans lequel le capteur de force (19) comprend un premier élément (19a) relié à la poignée (15) comprend un second élément (19b) relié au dispositif de transport de surfaces de support (1) et une traverse de liaison (19c) disposée entre les premier et second éléments (19a, 19b), laquelle traverse de liaison peut être déformée par l'application d'une force dans la direction de l'axe longitudinal de la poignée (15).

6. Dispositif de transport de surfaces de support selon l'une des revendications précédentes, comprenant en outre une unité de commande (13) qui commande les roulettes d'entraînement (8) comme un différentiel électronique en fonction des signaux du capteur d'angle de rotation (18) et du capteur de force (19).

7. Dispositif de transport de surfaces de support selon la revendication 6, dans lequel l'unité de commande (13) est conçue pour déterminer une vitesse de consigne (20) du dispositif de transport de surfaces de support (1) à partir des signaux du capteur d'angle de rotation (18) et une rotation de consigne du dispositif de transport de surfaces de support (1) à partir des signaux du capteur de force (19), dans lequel la vitesse de rotation d'au moins une roulette d'entraînement (8) est déterminée par addition de la vitesse de consigne (20) et de la rotation de consigne (21), et la vitesse de rotation d'au moins une autre roulette d'entraînement (8) est déterminée par soustraction de la vitesse de consigne (20) et de la rotation de consigne (21).

8. Dispositif de transport de surfaces de support (1) selon l'une des revendications 6 ou 7, dans lequel l'unité de commande (13) est en outre conçue pour limiter la valeur et/ou la variation dans le temps de la vitesse de rotation d'au moins une roulette d'entraînement (8) à des valeurs maximales prédéfinies.
